# EUROPÄISCHE PATENTANMELDUNG

(11) **EP 2 894 442 A1**
(43) Veröffentlichungstag der Anmeldung: **15.07.2015**
(21) Anmeldenummer: 14150394.6
(22) Anmeldetag: 08.01.2014
(51) Int. Cl.: G01J 5/02, G01J 5/00

(54) **Verfahren zur thermischen Erfassung von dreidimensionalen Objekten**

(71) Anmelder: Siemens AG Österreich, 1210 Wien (AT)
(72) Erfinder: Birchbauer, Josef Alois, 8054 Seiersberg (AT); Hatzl, Jürgen, 7423 Grafenschachen (AT); Kluckner, Stefan, 8047 Graz (AT)
(74) Vertreter: Maier, Daniel Oliver

(57) **Zusammenfassung**

Die Erfindung betrifft allgemein das Gebiet der Thermografie sowie der digitalen Bildverarbeitung. Im Speziellen bezieht sich die Erfindung auf ein Verfahren zur thermischen Erfassung eines dreidimensionalen Objektes wie z.B. eines Gebäudes, Bauobjektes, etc. Von diesem Objekt werden mit Hilfe eines Sensors zweidimensionale Thermalbilder erfasst (1), in welchen neben Wärmebilddaten für das Objekt auch zweidimensionale Informationsdaten für das Objekt im visuellen Spektrum umfasst sind. Mit Hilfe der zweidimensionalen Informationsdaten aus den Thermalbildern wird eine Relation der für das Objekt erfassten Wärmebilddaten zu einem dreidimensionalen Modell des Objekts hergestellt (2, 3). Eine geometrische Zerlegung und Segmentierung, insbesondere anhand einer geometrischen Ausrichtung von Objektteilen im Kontext mit vorliegenden Oberflächen und/oder eingesetzten Materialien, des dreidimensionalen Objektmodells in Einzelelemente wird durchgeführt (4) und dann ein Emissionsgrad zu den jeweiligen Einzelelementen semantisch annotiert (5). Daraus können dann lokale Emissionsgrade sowie Oberflächentemperaturen für das erfasste Objekt auf einfache Weise ermittelt und darstellbar gemacht werden (6). Durch das erfindungsgemäße Verfahren ist es damit möglich, die Datenqualität für eine Thermoinspektion von dreidimensionalen Objekten, insbesondere Gebäuden, Bauobjekten, etc., signifikant zu erhöhen und eine pixelgenaue und ortsrichtige Messung der Oberflächentemperatur durchzuführen.

## Beschreibung

### Technisches Gebiet

Die vorliegende Erfindung betrifft allgemein das Gebiet der Thermografie sowie der visuellen, digitalen Bildverarbeitung. Im Speziellen bezieht sich die vorliegende Erfindung auf ein Verfahren zur thermischen Erfassung eines dreidimensionalen Objektes wie z.B. eines oder mehrere Gebäude, Bauobjektes, etc. Von diesem Objekt werden mit Hilfe eines Sensors zweidimensionale Thermalbilder erfasst, in welchen neben Wärmebilddaten für das Objekt auch zweidimensionale Informationsdaten für das Objekt im visuellen Spektrum umfasst sind.

### Stand der Technik

Aufgrund von unterschiedlichen Initiativen, Richtlinien wie z.B. der European Energy Performance of Buildings Directive oder der im US amerikanischen Raum etablierten Leadership in Energy and Environmental Design (LEED)-Zertifizierung gewinnt ein thermografische Erfassen von Objekten wie z.B. Gebäuden, Bauobjekten, etc. eine immer größere Bedeutung. Die Thermografie wird daher immer häufiger für eine energiebasierte Planung, Optimierung und/oder Simulation sowie wärmetechnische Dokumentation von Ist- und/oder Soll-Zuständen eingesetzt. Eine Anwendung reicht dabei von Performance-Evaluierungen von Objekte wie z.B. Gebäuden bis hin zur Wärmestrahlungsbestimmung von z.B. Baugruppen.

Die Thermografie ist dabei ein bildgebendes Verfahren, mit dessen Hilfe Oberflächentemperaturen von Objekten zur Anzeige gebracht werden können. Dabei wird üblicherweise vom physikalischen Prinzip ausgegangen, dass von jedem Körper mit einer Temperatur über dem absoluten Nullpunkt an seiner Oberfläche eine seiner Eigentemperatur proportionale elektromagnetische Strahlung ausgesendet wird. Diese Strahlung kann mit einem bildgebenden Gerät oder Sensor - einer so genannten Wärmebildkamera - erfasst werden. Eine Wärmebildkamera ist ähnlich einer herkömmlichen Kamera mit dem Unterschied, dass von einer Wärmebild- oder Thermalkamera eine so genannte Infrarotstrahlung eines Objekts empfangen und aufgezeichnet wird. Die Infrarotstrahlung umfasst eine Wellenlängenbereich von ca. 0,7 µm bis ca. 14 µm. Von der Wärmebild- oder Thermalkamera wird die für das menschliche Auge unsichtbare Infrarotstrahlung in elektrische Signale umgewandelt und daraus ein Wärmebild in so genannten Falschfarben oder gegebenenfalls Grautonstufen erzeugt, welche die jeweilige Oberflächentemperatur bzw. jeweiligen Oberflächentemperaturen eines aufgenommenen Objektes repräsentieren. In Abhängigkeit von der jeweiligen Konfiguration kann von einer Wärmebild- oder Thermalkamera neben den Wärmebilddaten eines Objektes auch zweidimensionale, optische Bild desselben Objektes im visuellen Spektrum - d.h. im sichtbaren Lichtbereich - zeit- und ortssynchron aufgenommen werden. Eine derartige Kamera ist beispielsweise aus der Schrift EP 2 608 531 A2 bekannt. Derartige Kameras stellen damit so genannte Multilayer-Thermaldaten zur Verfügung, welche Wärmebilddaten im Infrarotbereich und zweidimensionale Informations- oder optische Bilddaten im visuellen Spektrum eines Objektes umfassen.

Das Wirkprinzip einer Wärmebildmessung mittels einer Wärmebild- oder Thermalkamera basiert darauf, dass eine Umgebungstemperatur sowie die Emissionseigenschaften eines zu vermessenden Objektes hinreichend genau bekannt sind. Ein Rückschluss auf die Oberflächentemperatur beispielsweise anhand eines Thermalbildes ist üblicherweise nur möglich, wenn eine gemessene emittierte Objektstrahlung mit einem bekannten Emissionsgrad abgeglichen wird. Unter Emissionsgrad eines Objektes wird üblicherweise jener Strahlungsanteil verstanden wird, welche vom Objekt im Vergleich zu einem idealen Wärmestrahler - einem schwarzen Körper - mit derselben Temperatur abgegeben wird. Der Emissionsgrad kann dabei Werte zwischen 0 und 1 annehmen. Der Emissionsgrad eines Objektes muss damit bekannt sein, damit aus der Intensität der abgegebenen Wärmestrahlung seine Oberflächentemperatur mit einer Wärmebild- oder Thermalkamera ermittelt werden kann.

Für eine Wärmebildmessung eines Objektes kann daher beispielsweise bei Wärmebild- oder Thermalkamera, welche z.B. als Handgeräte ausgeführt sein können, ein Emissionsgrad manuell eingestellt werden. Es wird dann für die Wärmebildmessung beispielsweise ein Punkt des zu erfassenden Objekts angepeilt, welcher z.B. ein Material mit dem eingestellten Emissionsgrad ausweist. Damit ist eine derart ausgeführte Wärmebildmessung eines Objektes im Prinzip nur für den jeweils angepeilten Punkt des Objektes korrekt.

Häufig bestehen mittels Wärmebildmessung erfasste Objekte wie z.B. Gebäude, Bauobjekte, etc. allerdings aus einem heterogenen Mix von unterschiedlichen Materialen und mit unterschiedlichen Oberflächenstrukturen und weisen damit mehrere unterschiedliche Emissionsgrade auf. Eine Gebäudefassade besteht beispielsweise aus Mauerteilen, Fenstern, Fensterrahmen, Türen, etc., welche aus unterschiedlichen Materialen bestehen und eine unterschiedliche Oberfläche bzw. Oberflächenstruktur aufweisen. Durch den Einsatz von unterschiedlichen Materialen bei einem erfassten Objekt weist dieses üblicherweise auch unterschiedliche Emissionsgrade auf. Damit hat eine thermale Erfassung mit Hilfe einer Wärmebild- oder Thermalkamera den Nachteil, dass bei Objekten aus einem Mix von unterschiedlichen Materialen nur für einen Bereich bzw. für einen Objektteil aus homogenem Material ein Emissionsgrad spezifiziert werden kann. Die thermale Erfassung bzw. die Bestimmung der Oberflächentemperatur des Objekts weist damit durch die unterschiedlichen Materialen und Emissionsgrad Ungenauigkeiten und Messfehler auf. Auch Reflexionen auf z.B. Oberflächen wie z.B. Glas, Metall, etc. können Störungen bei der Messung verursachen und gegebenenfalls das Messergebnis verfälschen.

### Darstellung der Erfindung

Der Erfindung liegt daher die Aufgabe zugrunde, ein Verfahren zur thermischen Erfassung von dreidimensionalen Objekten anzugeben, bei welchem auf einfache Weise ein Messergebnis der thermalen Erfassung ohne großen Aufwand verbessert und eine Datenqualität bei Thermoinspektionen bzw. bei thermaler Erfassung von dreidimensionalen Objekten signifikant gesteigert wird.

Die Lösung dieser Aufgabe erfolgt, durch ein Verfahren der eingangs angegebenen Art, bei welchem mittels zweidimensionales Informationsdaten des Objektes aus zweidimensionalen Thermalbildern des Objektes- insbesondere mittels Ortsreferenzierung - eine Relation von Wärmebilddaten des Objektes aus den zweidimensionalen Thermalbildern zu einem dreidimensionalen Modell des Objektes hergestellt wird. Dann wird eine geometrische Zerlegung und Segmentierung des dreidimensionalen Modells des Objektes in Einzelelemente bzw. in Objektteile durchgeführt. Zu den jeweiligen Einzelelementen wird dann ein Emissionsgrad semantisch annotiert und daraus lokale Emissionsgrade und Oberflächentemperaturen für das erfasste Objekt ermittelt und darstellbar gemacht.

Der Hauptaspekt des erfindungsgemäßen Verfahrens besteht darin, dass damit eine signifikante Erhöhung einer Datenqualität bei Thermoinspektionen von Objekten, insbesondere Gebäuden, Gebäudeteilen, Bauobjekten, etc. erzielt wird. Weiterhin kann mit dem erfindungsgemäßen Verfahren eine pixelgenaue und ortsrichtige Messung der Oberflächentemperatur des erfassten Objektes durchgeführt werden. Dazu wird die Möglichkeit genutzt, dass mit entsprechenden Sensoren (Wärmebild- oder Thermalkameras) Thermalbilder aufgenommen werden können, von welchen neben Wärmebilddaten auch zweidimensionale Informationsdaten des Objekts im visuellen Spektrum zeit- und ortssynchron erfasst werden. Damit können die gemessenen Wärmebilddaten mit dem dreidimensionalen Modell des Objektes sehr einfach mit Hilfe der zweidimensionalen Informationsdaten in Relation gebracht bzw. ortsreferenziert werden. Eine Ortsreferenzierung bedeutet dabei eine Ableitung einer Kamerazentrumsposition und einer normalisierten Blickrichtung der Kamera im dreidimensionalen Raum. Durch die Verknüpfung der Thermalbilder bzw. der darin enthalten Wärmebilddaten mit dem dreidimensionalen Modell des Objektes können dann sehr einfach Einzelelemente des Objektes durch geometrische Zerlegung und Segmentierung ermittelt und jedem Einzelelement ein jeweils (z.B. aufgrund des Materials, der Oberflächenstruktur, etc.) passender Emissionsgrad zugeordnet werden. Damit können dem Objekt beliebig viele Emissionsgrade zugeordnet werden, ohne dass diese explizit beim Aufnehmen der Thermalbilder am Sensor bzw. an der Wärmebild- oder Thermalkamera eingestellt werden müssen. Anhand der Emissionsgrade der Einzelelemente können dann bei hinreichend genauer Umgebungstemperatur und einer durch die Wärmebilddaten bekannten emittierten Objektstrahlung der jeweiligen Einzelelemente die jeweiligen Oberflächentemperaturen ermittelt und ohne großen Aufwand darstellbar gemacht werden.

Es ist dabei auch von Vorteil, wenn die den Einzelelementen zugeordneten Emissionsgrade in die zweidimensionalen Thermalbilder des erfassten Objektes zurückprojiziert werden. Durch eine Ortsreferenzierung können die mit Hilfe des dreidimensionalen Modells des Objektes festgelegten Emissionsgrade sehr einfach in die zweidimensionalen Thermalbilder ortsrichtig und pixelgenau zurückpropagiert werden. Somit entsteht dann pro zweidimensionalen Thermalbild zur pixelweise gemessenen lokalen Objektstrahlung bzw. Emission eine Pixelmap von lokalen Emissionsgraden, die als neben den Wärmebilddaten bzw. der gemessen lokalen Emission und den zweidimensionalen Informationsdaten im sichtbaren Spektrumsbereich als weitere Datenschicht gesehen werden kann. Aus dem Bild bzw. der Datenschicht der Emissionsgrade und dem mit dem Sensor erfassten Thermalbild bzw. Bild der Wärmebilddaten/lokalen Emissionen kann dann auf einfache Weise ebenfalls ein pixelgenaues Bild der Oberflächentemperaturen abgeleitet werden. Dabei werden beliebig viele Emissionsgrade berücksichtigt, ohne dass explizit am Sensor bzw. an der Wärmebild- oder Thermalkamera eingestellt werden müssen.

Weiterhin ist es günstig, wenn die geometrische Zerlegung und Segmentierung des dreidimensionalen Modells des Objektes in Einzelelemente anhand von geometrischer Ausrichtung von Objektteilen im Kontext mit vorliegenden Oberflächen und/oder eingesetzten Materialen durchgeführt wird. Durch die Segmentierung werden auf einfache Weise inhaltlich zusammenhängende Einzelelemente des Objektes durch Zusammenfassen benachbarter Bildpunkte oder 3D-Datenpunkten erzeugt. Als Homogenitätskriterium wird dabei idealer Weise z.B. das jeweilige Material eines Objektteils verwendet. Auf diese Weise kann dann für das Einzelelement sehr einfach der Emissionsgrad, welcher Material abhängig ist, bestimmt und dem Einzelelement zugewiesen werden. Auch eine geometrische Ausrichtung von Objektflächenstücken im Raum unter Berücksichtigung der jeweiligen Oberflächenstruktur kann als Homogenitätskriterium für die Segmentierung herangezogen werden, welche dann genutzt werden, um den so entstandenen Einzelelementen dann Materialeigenschaften und einen Emissionsgrad zuzuweisen.

Im einfachsten Fall wird eine Zuordnung der Materialeigenschafte und damit der jeweiligen Emissionsgrade zu den jeweiligen Einzelelementen des dreidimensionalen Modells des Objektes manuell durchgeführt. Eine manuelle Zuordnung kann insbesondere ohne großen Aufwand bei einfachen und wenig komplexen Objekten wie z.B. Einzelgebäuden, Gebäudeteilen, etc. verwendet werden.

Alternativ empfiehlt sich bei der Thermoinspektion von komplexeren Objekten wie z.B. Gebäudekomplexen, Stadtteilen, energietechnischen Anlagen (z.B. Kraftwerken, Windparks, Solarkraftwerken, etc.), Industrieanlagen oder Teilen davon (z.B. Motoren, Pumpen, etc.), dass eine Zuordnung von jeweiligen Emissionsgraden zu den jeweiligen Einzelelementen des dreidimensionalen Modells des Objektes mit Hilfe von digital erfassten Objektdaten durchgeführt wird. Bei Gebäuden, Gebäudekomplexen, etc. kann dazu beispielsweise das so genannte Building Information Modelling (Gebäudedatenmodellierung oder BIM) herangezogen werden. Dabei können beispielsweise im Sinne einer so genannten Atlassegmentierung im BIM bekannte Emissionsgrade ortsreferenziert zwischen den Modellen übertragen werden - d.h. zwischen dem dreidimensionalen Modell des Objektes und dem Building Information Modell des Objektes.

Weiterhin empfiehlt sich, wenn das dreidimensionale Modell des Objektes aus überlappenden zweidimensionalen Bilddaten des Objektes abgeleitet wird. Die Erfassung der zweidimensionalen Bilddaten des Objektes kann dabei unabhängig von den Aufnahmen der Thermalbilder des Objektes durchgeführt werden. Die überlappenden zweidimensionalen Bilddaten werden beispielsweise in einer separaten Aufnahmenserie mit einem anderen Sensors wie z.B. einer (digitalen) Spiegelreflexkamera aufgenommen. Das dreidimensionale Modell des Objektes wird dann aus den überlappenden zweidimensionalen Bilddaten z.B. mittels bekannter Bildmessverfahren wie z.B. dem Structure-from-Motion (SfM)-Verfahren oder dem Aerial Triangulation-Verfahren und nachfolgender dichter dreidimensionaler Modellierung rekonstruiert, wobei es eine Zielsetzung der dichten dreidimensionalen Modellierung eine Generierung eines geometrischen dreidimensionalen Modells mit geschlossenen Oberflächen (z.B. aufgrund eines so genannten Dreiecksmeshes) ist.

Beim SfM-Verfahren können dabei die für die Generierung des dreidimensionalen Modells aufgenommenen Bildsequenzen beispielsweise ungeordnet vorliegen, georeferenziert sein oder auch die Information über das lokale Bewegungsmuster bei der Aufnahme beinhalten. Es werden dann in den Bildern so genannte "Interest Points" detektiert und diese mit Deskriptoren versehen, welcher die lokale Umgebung eines Interest Points beschreibt und es erlaubt, diese Beschreibung mit Interest Points in anderen Bildern zu vergleichen. In der Folge wird bildübergreifend die Korrespondenz zwischen übereinstimmenden Interest Points hergestellt. Aus einer Vielzahl von Korrespondenzen entsteht dann als Ergebnis zunächst eine dreidimensionale oder 3D-Punktwolke - d.h. eine Rekonstruktion der übereinstimmenden Interest Points als Punkte im Raum. Aus dieser 3D-Punktwolke kann dann das 3D-Modell des Objektes abgeleitet werden.

Eine Vorberechnung des dreidimensionalen Modells des Objektes aufgrund von sichtbarer Radiometrieinformation - d.h. anhand von einer z.B. in RGB-Farbe aufgenommenen separaten Bilderserie - erlaubt idealer Weise die Wiederverwendung des dreidimensionalen Objektmodells über periodische Thermoinspektionen ein und derselben Objektgeometrie. Das dreidimensionale Modell des Objektes wird dazu einmal generiert, dann z.B. in einer Datenbank abgelegt und kann immer wieder für die Thermoinspektion bzw. das erfindungsgemäße Verfahren herangezogen werden.

Weiterhin weist eine von der Aufnahme der Thermalbilder getrennte Erstellung des dreidimensionalen Modells den Vorteil auf, dass dadurch die Aufnahme der Thermalbilder bzw. Vermessung der Wärmebilddaten vereinfacht wird. Die aufgenommenen Thermalbilder müssen lediglich im Bezug zum bereits bestehenden 3D-Modell des Objektes lokalisiert bzw. registriert werden. Dazu muss beispielsweise eine wesentlich geringer Bildmenge bzw. ein geringere Bildüberlapp bei der eigentlichen Thermoinspektion aufgenommen werden, als wenn eine Rekonstruktion des dreidimensionalen Modells des Objektes anhand der Thermalbilder durchgeführt wird.

Alternativ ist es aber auch möglich, dass das dreidimensionale Modell des Objektes aus den bei der Thermoinspektion erfassten Thermalbildern bzw. aus den zweidimensionalen Informationsdaten des Objektes im visuellen Spektrum generiert wird, welche von den zweidimensionalen Thermalbildern des Objektes umfasst werden. Dazu können wiederum bekannten Bildvermessungsverfahren (z.B. Structure-from-Motion, Arial Triangulation, etc.) verwendet werden und mittels nachfolgender dichter 3D-Modellierung das 3D-Modell des Objektes rekonstruiert werden. Für die Rekonstruktion müssen die zweidimensionalen Thermalbilder in den zweidimensionalen Informationsdaten im sichtbaren Spektrum allerdings einen entsprechenden Bildüberlapp aufweisen - d.h. es muss eine größere Menge an Bildern bei der Thermoinspektion aufgenommen werden. Die Ableitung des 3D-Modells des Objektes aus den aufgenommenen Thermalbilder bietet aber den Vorteil, dass eine Ortsreferenzierung des zweidimensionalen Bildmaterials - insbesondere der Wärmebilddaten aus den zweidimensionalen Thermalbildern im dreidimensionalen Objektmodell wesentlich genauer wird als bei separaten Aufnahmen. Es besteht keine Varianz in den Kamera- und/oder Bildeigenschaften (z.B. intrinsische Kameraeigenschaften), da die Daten der Thermalbilder nicht nur für die Wärmebildinformation, sondern auch zur Generierung des dreidimensionalen Modells des Objektes herangezogen werden.

### Kurzbeschreibung der Zeichnung

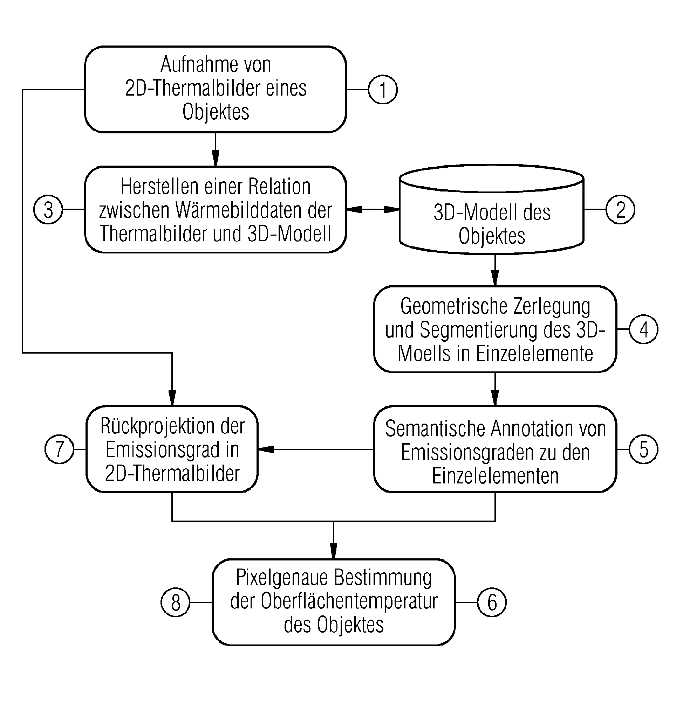

Die Erfindung wird nachfolgend schematisch in beispielhafter Weise anhand der beigefügten Figur erläutert. Figur 1 zeigt dabei schematisch einen beispielhaften Ablauf des erfindungsgemäßen Verfahrens zur thermalen Erfassung von dreidimensionalen Objekten.

### Ausführung der Erfindung

Figur 1 zeigt in schematischer Weise einen beispielhaften Ablauf des erfindungsgemäßen Verfahrens zur thermalen Erfassung eines dreidimensionalen Objektes. In einem ersten Verfahrensschritt 1 werden mit Hilfe eines Bildsensors wie z.B. einer Wärmebild- oder Thermalkamera Thermalbilder eines zu thermal erfassenden und vermessenden dreidimensionalen Objektes wie z.B. einem Gebäude, einem Gebäudeteil, einem Bauteil, einem Gebäudekomplex, einer Industrie- oder Kraftwerksanlage, etc. erstellt. Diese zweidimensionalen Thermalbilder umfassen neben den Wärmebilddaten - üblicherweise die im infraroten Spektrumbereich (Wellenlängenbereich von ca. ca. 0,7 µm bis ca. 14 µm) aufgenommene vom jeweiligen Objektteil ausgesendete Strahlung - auch zweidimensionale Informationsdaten des jeweils aufgenommenen Objektteils im visuellen Spektrumbereichs.

Im zweiten Verfahrensschritt 2 wird dann ein dreidimensionales Modell des zu erfassenden Objektes für das erfindungsgemäße Verfahren zur Verfügung gestellt bzw. generiert. Dieses dreidimensionale Modell des Objektes kann beispielsweise von einer Datenbank oder einer Speichereinrichtung zur Verfügung gestellt werden, wenn das 3D-Modell des Objektes z.B. separat von der Thermoinspektion des Objektes aus überlappenden Bilddaten des Objektes generiert worden ist. Dazu kann beispielsweise zu einem beliebigen Zeitpunkt mit z.B. einer digitalen Spiegelreflexkamera eine Bildersequenz mit entsprechenden Bildüberlapp erstellt werden. Mittels gängiger Bildmessverfahren wie z.B. Structure-from-Motion/Arial Triangulation und einer nachfolgenden dichten 3D-Modellierung wird dann ein dreidimensionales Modell des Objektes generiert. Dieses Modell kann z.B. in einer Datenbank oder Speichereinheit für eine periodische Thermoinspektion gespeichert werden.

Weiterhin ist es aber auch möglich, dass im zweiten Verfahrensschritt 2 das dreidimensionale Modell des thermal zu erfassenden Objektes aus den aufgenommenen, zweidimensionalen Thermalbildern bzw. aus den in den Thermalbildern enthaltenen Informationsdaten des Objektes im visuellen Spektrum. Dazu werden ebenfalls für die Generierung des 3D-Modells des Objektes z.B. gängige Bildmessverfahren wie z.B. Structure-from-Motion/Arial Triangulation und eine dichte 3D-Modellierung eingesetzt.

Ist das dreidimensionale Modell des Objekts verfügbar bzw. generiert, wird in einem dritten Verfahrensschritt 3 anhand der Informationsdaten im visuellen Spektrum aus den Thermalbilder eine Relation zwischen den Wärmebilddaten aus den zweidimensionalen Thermalbildern und dem dreidimensionalen Modell des Objektes hergestellt. Auf der Oberfläche des 3D-Modells des Objektes kann nun beispielsweise wahlweise eine visuelle Textur oder/und die Wärmebilddateninformation als Texturinformation dargestellt werden. Es ist z.B. ein Überblendung zwischen diesen beiden Informationsschichten (visuelle Textur, Wärmebilddaten) und/oder ein nahtloses Wechseln zwischen visueller Textur und Wärmebilddaten Information in der dreidimensionalen Modelldarstellung des Objektes möglich.

In einem vierten Verfahrensschritt 4 wird dann eine geometrische Zerlegung und Segmentierung des dreidimensionalen Objektmodells in Einzelelemente durchgeführt. Das Modell wird dabei geometrisch eindeutig in Bezug auf relevante Objektteile (z.B. Mauerflächen, Fenster, Türen, etc. bei einem Gebäude oder Gebäudekomplex) im Kontext mit vorliegenden Oberflächen und/oder verwendeten Materialen in Einzelelemente zerlegt. Im Idealfall liegt dann eine geometrische Abstraktion des aufgenommenen Objektes in Form von Flächenstücken im Raum oder parametrische geometrischen Objektprimitiven als Einzelelemente vor, welchen nur ein Material und/oder eine Oberflächenbeschaffenheit zugewiesen werden kann, wobei die Oberflächenbeschaffenheit üblicherweise mit dem verwendeten Material im Zusammenhang steht.

In einem fünften Verfahrensschritt 5 wird dann den jeweiligen Einzelelementen des Objektes ein Emissionsgrad semantisch annotiert. Der jeweilige Emissionsgrad des jeweiligen Einzelelements ist üblicherweise vom Material abhängig und kann einen Wert zwischen 0 und 1 annehmen. Unter dem Emissionsgrad wird üblicherweise jener Strahlungsanteil verstanden, welche vom Objekt im Vergleich zu einem idealen Wärmestrahler - einem schwarzen Körper - mit derselben Temperatur abgegeben wird. Die Zuweisung des Emissionsgrads zum jeweiligen Einzelelement wird im einfachsten Fall manuell durchgeführt. Die jeweiligen Emissionsgrad für die jeweiligen Einzelelemente können allerdings auch automatisiert auf Basis von digital erfassten Objektedaten - wie z.B. einem so genannten Build Information Modell (BIM) - zugewiesen werden.

Mit Hilfe des Emissionsgrads kann bei bekannter Emission bzw. ausgesendeter Oberflächenstrahlung des jeweiligen Einzelelements, welche von den Wärmebilddaten zur Verfügung gestellt worden ist, in einem sechsten Verfahrensschritt 6 eine lokale Oberflächentemperatur ortsrichtig und pixelgenau abgeleitet und z.B. im dreidimensionalen Objektmodell als weitere Informationsschicht darstellbar gemacht werden.

Weiterhin können in einem siebenten Verfahrensschritt 7 über eine Ortsreferenzierung einzelner zweidimensionaler Thermalbilder die für die Einzelelemente des Objektes ermittelten Emissionsgrad ortsrichtig und punktgenau in die zweidimensionalen Thermalbilder zurückprojiziert werden. Damit entsteht in den zweidimensionalen Thermalbildern einer weitere Informationsschicht der lokalen Emissionsgrad, mit deren Hilfe in einem achten Verfahrensschritt 8 eine pixelgenaue Darstellung bzw. Pixelmap der Oberflächentemperaturen in den Thermalbildern möglich ist.

Durch das erfindungsgemäße Verfahren können auf einfache Weise aus einer 3D-Darstellung des Objektes Emissionsgrade und genaue Oberflächentemperaturen ermittelt werden, welche beispielsweise neuartige Auswerte- und Analysemöglichkeiten in der Thermoinspektion möglich machen. Durch die Zurückprojektion der lokalen Emissionsgrad in die 2D-Thermalbilder entstehen zweidimensionale Thermalbilder eines Objektes, in welchen zusätzlich zur gemessenen Emission auch eine lokale Emissionsgrade und Oberflächentemperaturen darstellbar sind, wobei je Bildausschnitt beliebig viele Emissionsgrade berücksichtigt werden können und damit Thermalbilder mit sehr hoher Messgenauigkeit entstehen, welche im Erscheinungsbild klassischen Aufnahmen (ohne punktgenaue Oberflächentemperatur) gleichen.

## Patentansprüche

1. Verfahren zur thermischen Erfassung eines dreidimensionalen Objektes aus heterogenen Materialen, wobei von dem Objekt zweidimensionale Thermalbilder erfasst werden (1), welche neben Wärmebilddaten auch zweidimensionale Informationsdaten des Objektes im visuellen Spektrum umfassen, **dadurch gekennzeichnet, dass** mittels der zweidimensionalen Informationsdaten des Objektes eine Relation der Wärmebilddaten aus den zweidimensionalen Thermalbilder zu einem dreidimensionalen Modell des Objektes hergestellt wird (2,3), dass eine geometrische Zerlegung und Segmentierung des dreidimensionalen Modells des Objekts in Einzelelemente durchgeführt wird (4), dass dann ein Emissionsgrad zu den jeweiligen Einzelelementen semantisch annotiert wird (5), und dass daraus lokale Emissionsgrade und Oberflächentemperaturen für das erfasste Objekt ermittelt und darstellbar gemacht werden(6).

2. Verfahren nach Anspruch 1, **dadurch gekennzeichnet, dass** die den Einzelelementen zugeordneten Emissionsgrade in die zweidimensionalen Thermalbilder des Objektes zurückprojiziert werden (7, 8).

3. Verfahren nach einem der Ansprüche 1 bis 2, **dadurch gekennzeichnet, dass** die geometrische Zerlegung und Segmentierung des dreidimensionalen Modells des Objektes in Einzelelemente anhand von geometrischer Ausrichtung von Objektteilen im Kontext mit vorliegenden Oberflächen und/oder eingesetzten Materialen durchgeführt wird.

4. Verfahren nach einem der Ansprüche 1 bis 3, **dadurch gekennzeichnet, dass** eine Zuordnung von jeweiligen Emissionsgraden zu den jeweiligen Einzelelementen manuell durchgeführt wird (5).

5. Verfahren nach einem der Ansprüche 1 bis 3, **dadurch gekennzeichnet, dass** eine Zuordnung von jeweiligen Emissionsgraden zu den jeweiligen Einzelelementen automatisiert mit Hilfe von digital erfassten Objektdaten, insbesondere mit Hilfe eines so genannten Building Information Modelling, durchgeführt wird (5).

6. Verfahren nach einem der Ansprüche 1 bis 5, **dadurch gekennzeichnet, dass** das dreidimensionale Modell des Objektes aus überlappenden zweidimensionalen Bilddaten des Objektes ermittelt wird (2).

7. Verfahren nach einem der Ansprüche 1 bis 5, **dadurch gekennzeichnet, dass** das dreidimensionale Modell des Objektes aus den Informationsdaten des Objektes im visuellen Spektrum abgeleitet wird (2), welche von den zweidimensionalen Thermalbildern umfasst werden.
